(19) Europäisches Patentamt
European Patent Office
Office européen des brevets

(11) **EP 1 229 627 B1**

(12) **EUROPÄISCHE PATENTSCHRIFT**

(45) Veröffentlichungstag und Bekanntmachung des Hinweises auf die Patenterteilung:
**30.09.2009 Patentblatt 2009/40**

(51) Int Cl.:
***H02H 3/28*** *(2006.01)*

(21) Anmeldenummer: **02090044.5**

(22) Anmeldetag: **31.01.2002**

(54) **Verfahren zum Erzeugen eines Auslösesignals nach dem Stromdifferentialschutzprinzip und Stromdifferentialschutzanordnung**

Method of generating a trip signal for a current differential protection and device

Méthode de génération d'un signal de déclenchement pour une protection contre des courants différentiels et dispositif

(84) Benannte Vertragsstaaten:
**DE FR GB IT**

(30) Priorität: **05.02.2001 DE 10106279**

(43) Veröffentlichungstag der Anmeldung:
**07.08.2002 Patentblatt 2002/32**

(73) Patentinhaber: **SIEMENS AKTIENGESELLSCHAFT
80333 München (DE)**

(72) Erfinder:
• **Mahnert, Hartmut, Dr.
90471 Nuernberg (DE)**
• **Nibler, Josef
92367 Pilsach (DE)**

(56) Entgegenhaltungen:
**DE-C1- 4 436 254       US-A- 4 825 326**

**Beschreibung**

Die Erfindung bezieht sich auf ein Verfahren zum Erzeugen eines Auslösesignals nach dem Stromdifferentialschutzprinzip bei einem Fehler auf einem Abschnitt eines elektrischen Energieversorgungsnetzes, bei dem Differenzstromwerte auf Überschreiten eines vorgegebenen unteren Grenzwertes des Differenzstromes (Differenzstromgrenzwert)sowie auf Überschreiten mit einem Kennlinienfaktor bewerteter Stabilisierungsstromwerte überwacht werden und das Auslösesignal erzeugt wird, wenn gleichzeitig positive Ergebnisse beider Überwachungen vorliegen.

Ein Verfahren dieser Art ist aus der deutschen Patentschrift DE 44 36 254 C1 bekannt. Bei diesem bekannten Verfahren werden mittels Stromwandlern Ströme an den Enden eines Abschnittes eines elektrischen Energieversorgungsnetzes erfasst, der auf das Auftreten eines inneren Fehlers zu überwachen ist. Die mittels der Stromwandler gewonnenen Ströme werden bei dem bekannten Verfahren in einer Messwertvorverarbeitungseinrichtung in effektivwertproportionale Messgrößen umgewandelt, mit denen Differenz- und Stabilisierungsstromwerte gewonnen werden. Um einen Fehler auf dem zu überwachenden Abschnitt eines Energieversorgungsnetzes zu erfassen, werden Differenzstromwerte auf Überschreiten eines vorgegebenen unteren Grenzwertes des Differenzstromes (Differenzstromgrenzwert) sowie auf Überschreiten mit einem Kennlinienfaktor bewerteter Stabilisierungsstromwerte überwacht; es wird das Auslösesignal erzeugt, wenn gleichzeitig positive Ergebnisse beider Überwachungen vorliegen.

Besondere Vorkehrungen müssen bei dem bekannten Verfahren gegen Fehlauslösungen infolge von Sättigungserscheinungen in den Stromwandlern getroffen werden. Stromwandler übertragen nämlich unter Umständen nur für jeweils einen begrenzten kurzen Zeitraum jeder Periode die Messwerte einwandfrei, weil sie bei größeren Stromwerten in Sättigung gehen. Durch die Sättigungserscheinungen in den Stromwandlern können an sich bezüglich des zu überwachenden Abschnittes außenliegende Fehler irrtümlicherweise als innere Fehler eingestuft werden, was dann zu unerwünschten Auslösungen führen kann. Um dem vorzubeugen, ist bei dem bekannten Verfahren nach dem Stromdifferentialschutzprinzip dafür gesorgt, dass nach Feststellen eines außen liegenden Fehlers im Zustand ungesättigter Stromwandler die Ausgabe eines Auslösesignals blockiert wird. Das Blockieren wird dabei nicht für eine fest vorgegebene Zeit vorgenommen, sondern erfolgt von einem von den jeweiligen Verhältnissen abhängigen Zeitpunkt an für eine vorgegebene Zeitdauer. Nach Ablauf dieser Zeitdauer kann das bekannte Verfahren dann wieder auf einen inneren Fehler ansprechen.

Der Erfindung liegt die Aufgabe zugrunde, ein Verfahren zum Erzeugen eines Auslösesignals nach dem Stromdifferentialschutzprinzip vorzuschlagen, mit dem bei einem inneren Fehler schnell und zuverlässig - unter Vermeidung von Fehlauslösungen bei äußeren Fehlern mit Wandlersättigung - ein Auslösesignal erzeugt werden kann.

Zur Lösung dieser Aufgabe werden bei einem Verfahren der eingangs angegebenen Art erfindungsgemäß die Differenzstromwerte und die Stabilisierungsstromwerte Stabilisierungsstrommomentanwerte mit Momentanwerten der am elektrischen Energieversorgungsnetz erfassten Ströme errechnet, und es wird eine dem Differentialquotienten des Stabilisierungsstromes nach der Zeit proportionale erste Messgröße gebildet und in einem Auswertungsvorgang überprüft, ob diese erste Messgröße einen vorgegebenen Grenzwert des Differentialquotienten des Differenzstromes nach der Zeit (Differenzstromquotientengrenzwert) überschreitet; es wird ferner eine dem Differentialquotienten des Differenzstromes nach der Zeit proportionale zweite Messgröße gebildet und in einem weiteren Auswertungsvorgang überprüft, ob die zweite Messgröße den Differenzstromquotientengrenzwert übersteigt, und es wird das Auslösesignal erzeugt, wenn beide Auswertungsvorgänge gleichzeitig mit den beiden Überwachungen positive Ergebnisse erbringen.

Ein wesentlicher Vorteil des erfindungsgemäßen Verfahrens wird darin gesehen, dass durch die Verarbeitung von Momentanwerten der am elektrischen Energieversorgungsnetz erfassten Ströme zunächst einmal der Rechenaufwand vergleichsweise gering gehalten werden kann. Dies wird noch dadurch gefördert, dass die Auswertungsvorgänge beim erfindungsgemäßen Verfahren relativ einfach ablaufen, so dass insgesamt der Rechenaufwand vergleichsweise gering ist. Andererseits besteht mit dem erfindungsgemäßen Verfahren die vorteilhafte Möglichkeit, die Rechenoperationen in vergleichsweise kurzen Abständen durchführen zu können, ohne eine relativ große Datenverarbeitungseinrichtung einsetzen zu müssen.

Um mit besonders hoher Sicherheit Fehlauslösungen bei äußeren Fehlern mit einhergehender Sättigung der Stromwandler auszuschließen, wird bei einer weiteren Ausgestaltung des erfindungsgemäßen Verfahrens geprüft, ob die erste Messgröße größer als die zweite Messgröße ist, und ggf. das Auslösesignal erzeugt.

Ferner hat es sich zur weiteren Steigerung der Zuverlässigkeit des erfindungsgemäßen Verfahrens als vorteilhaft herausgestellt, wenn überprüft wird, ob die zweite Messgröße die mit dem Kennlinienfaktor bewertete erste Messgröße überschreitet; ggf. wird das Auslösesignal erzeugt.

Um bei dem erfindungsgemäßen Verfahren zu verhindern, dass aufgrund von Impedanzunterschieden der Einspeisungen bei einem Fehler auf dem zu überwachenden Abschnitt des elektrischen Energieversorgungsnetzes ein scheinbarer Fehlerort außerhalb des Abschnittes erkannt wird, wird bei einer weiteren vorteilhaften Ausführungsform des erfindungsgemäßen Verfahrens jeweils in einem Zeitbereich, in dem die erste Messgröße kleiner als Null wird, der kleinste Wert des Stabilisierungsstroms bestimmt wird, und jeweils in einem Zeitbereich, in dem die erste Messgröße größer als Null wird, ihr größter Wert bestimmt wird; es wird überprüft, ob der Stabilisierungsstrom größer als das KMIN-Fache des kleinsten Wertes des Stabilisierungsstroms ist mit $1 < \text{KMIN} < \sqrt{2}$ sowie des 0,5fachen Wertes des größten Wertes ist und gegebenenfalls das Auslösesignal erzeugt.

Bei einer vorteilhaften Ausführungsform des erfindungsgemäßen Verfahrens wird das Auslösesignal erzeugt, wenn bei den Auswertungsvorgängen und den Überwachungen Ns-Mal hintereinander positive Ergebnisse erzielt worden sind, wobei Ns frei wählbar ist. Damit lässt sich eine Schnellauslösung bewirken, wenn Ns sehr klein, z. B. Ns=1 oder Ns=2 gewählt wird.

Lässt sich mit dem erfindungsgemäßen Verfahren keine Schnellauslösung erreichen, dann wird vorteilhafterweise beim Ausbleiben von Ns-Ergebnissen das Auslösesignal dann erzeugt, wenn mindestens die Überwachungen Nz-Mal positive Ergebnisse erbracht haben mit Ns<<Nz.

Bei dem erfindungsgemäßen Verfahren wird es zur Vermeidung von Fehlauslösungen ferner als vorteilhaft angesehen, wenn beim Ausbleiben eines Auslösesignals ein internes Sperrsignal erzeugt wird, wenn die erste Messgröße größer ist als der Grenzwert dieser Größe, ferner die zweite Messgröße kleiner ist als der mit dem k-Faktor bewertete Momentanwert der ersten Messgröße und dabei der Momentanwert des Stabilisierungsstroms größer ist als ein Grenzwert, ein erster umbewerteter Grenzwert, ein zweiter umbewerteter Grenzwert und ein als Mittelwert aus vorangehenden Werten berechneter Vergleichswert.

Die Erfindung bezieht sich ferner auf eine Stromdifferentialschutzanordnung für einen Abschnitt eines elektrischen Energieversorgungsnetzes mit einer Messwertvorverarbeitungseinrichtung, in der aus an den Enden des Abschnittes erfassten Strömen fortlaufend jeweils Differenzstromwerte und diesen jeweils zugeordnete Stabilisierungsstromwerte gebildet werden, mit einer der Messwertvorverarbeitungseinrichtung nachgeordneten Auswerteeinrichtung, in der der Differenzstrom darauf geprüft wird, ob er einen vorgegebenen Differenzstromgrenzwert überschreitet, und mit einer Logikschaltung, die eingangsseitig an die Auswerteeinrichtung angeschlossen ist und einen Ausgang zur Abgabe eines Auslösesignals aufweist. Eine solche Stromdifferentialschutzanordnung ist in der eingangs bereits behandelten deutschen Patentschrift DE 44 36 254 C1 beschrieben.

Um mit einer solchen Stromdifferentialschutzanordnung schnell und zuverlässig Auslösesignale bei einem inneren Fehler auf den zu überwachenden Abschnitt eines elektrischen Energieversorgungsnetzes gewinnen zu können, ist erfindungsgemäß die Messwertvorverarbeitungseinrichtung so ausgebildet, dass sie Differenzstrommomentanwerte und Stabilisierungsstrommomentanwerte erzeugt; ferner ist einem mit Stabilisierungsstrommomentanwerten beaufschlagten ersten Differenzierer eine erste Grenzwertstufe nachgeordnet, die eingangsseitig auch an einen Differenzstromquotientengrenzwert-Geber angeschlossen; es ist auch einem mit Differenzstrommomentanwerten beaufschlagten zweiten Differenzierer eine zweite Grenzwertstufe nachgeordnet, die eingangsseitig auch an den Differenzstromquotienten-Geber angeschlossen ist, und den Grenzwertstufen ist die Logikschaltung nachgeordnet, die beim Vorliegen von Ausgangssignalen der Grenzwertstufen das Auslösesignal erzeugt.

Weitere vorteilhafte Ausgestaltung dieser Stromdifferentialschutzanordnung ergeben sich aus den Ansprüchen 9 bis 13, wobei darauf hinzuweisen ist, dass der Aufbau der erfindungsgemäßen Stromdifferentialschutzanordnung insgesamt zweckmäßigerweise durch eine Datenverarbeitungseinrichtung erfolgt.

Zur weiteren Erläuterung des erfindungsgemäßen Verfahrens bzw. der erfindungsgemäßen Stromdifferentialschutzanordnung ist in der

Figur 1 ein Blockschaltbild zur Beschreibung des Ablaufs eines Ausführungsbeispiels des erfindungsgemäßen Verfahrens und in

Figur 2 eine Ausführungsform einer Logikschaltung des Blockschaltbildes gemäß Figur 1

wiedergegeben.

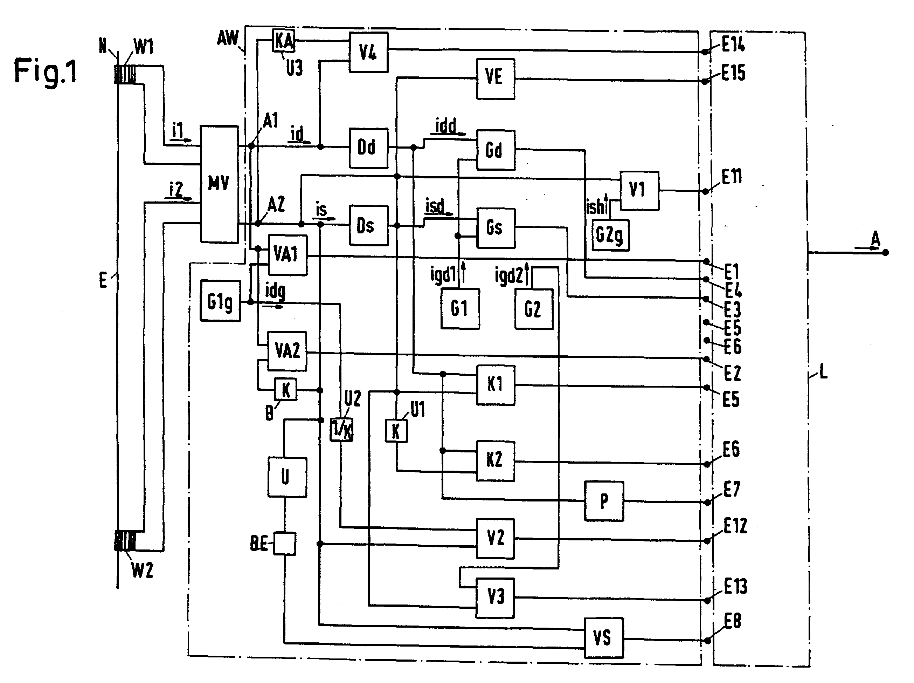

Die Figur 1 zeigt einen auf Fehler zu überwachenden Abschnitt E eines Energieversorgungsnetzes N, der von Stromwandlern W1 und W2 begrenzt ist. Mittels der Stromwandler W1 und W2 werden den Strömen durch die Primärwicklungen dieser Wandler proportionale Sekundärströme i1 und i2 gewonnen, die einer Messwertvorverarbeitungseinrichtung MV mit nachgeordneter Auswerteeinrichtung AW zugeführt werden.

In dieser Messwertvorverarbeitungseinrichtung MV sind u. a. Tiefpässe vorhanden, mit denen beispielsweise durch äußere elektromagnetische Beeinflussung verursachte Veränderungen der Ströme i1 und i2 eliminiert werden. Ferner werden in der Messwertvorverarbeitungseinrichtung MV Differenzstrommomentanwerte id gemäß der nachstehenden Gleichung (1) gebildet.

$$id = \left| \sum (i1, i2) \right| \qquad\qquad (1)$$

In der Messwertvorverarbeitungseinrichtung MV werden auch Stabilisierungsstrommomentanwerte is gemäß der nachstehenden Gleichung (2) erzeugt.

$$is = \sum |i1| \cdot |i2| \qquad\qquad (2)$$

Der Theorie nach lässt sich durch Betrachtung der Ströme id und is auf einen fehlerfreien Abschnitt E schließen, wenn der Differenzstrom id Null ist; ein Fehler auf dem Abschnitt E ist dann gegeben, wenn der Differenzstrom id genauso groß wie der Stabilisierungsstrom is ist. In der Praxis sind die Verhältnisse jedoch erheblich komplizierter, weil bei der Erfassung der Sekundärströme i1 und i2 Messfehler durch den Einsatz der Stromwandler W1 und W2 auftreten. Diese Messfehler sind dann besonders groß, wenn die Stromwandler W1 und W2 in die Sättigung gelangen, was bei einem Kurzschluss im Energieversorgungsnetz N mit einhergehenden Kurzschlussströmen der Fall sein kann.

In der Praxis wird deshalb im Falle eines Fehlers auf dem Abschnitt E angenommen, dass dann

$$id > idg \qquad\qquad (5)$$

$$id > K \cdot is \qquad\qquad (6)$$

Dabei ist mit idg ein Grenzwert des Differenzstromes id gemeint. Mit K ist ein Kennlinienfaktor bezeichnet, der in bekannter Weise in seiner Größe zwischen Null und 1 liegt. Mit diesem Kennlinienfaktor K wird berücksichtigt, dass Messfehler bei der Erfassung der Ströme i1 und i2 mit wachsendem Strom auf dem Abschnitt E größer werden können, dass über den Abschnitt E fließende normale Lastströme dem Fehlerstrom überlagert sein können und unterschiedliche Impedanzen angeschlossener Leitungen Phasenunterschiede bewirken können. Unter den üblichen Betriebsverhältnissen der Netze kann eine ausreichende Stabilität einer mit diesen Kriterien arbeitenden Stromdifferentialschutzanordnung erreicht werden, wenn der Differenzstromgrenzwert idg und der Kennlinienfaktor K hoch genug eingestellt werden; dabei ist aber zu beachten, dass eine für den Anwendungsfall befriedigende Empfindlichkeit gesichert sein muss, indem diese Größen niedrig genug eingestellt werden.

Den Gleichungen (5) und (6) ist bei dem Ausführungsbeispiel nach Figur 1 dadurch Rechnung getragen, dass an einen Differenzstrommomentanwerte id führenden Ausgang A1 der Messvorverarbeitungseinrichtung MV mit einem Eingang eine Vergleichsanordnung VA1 der Auswerteeinrichtung AW angeschlossen ist; mit ihrem anderen Eingang ist die Vergleichsanordnung VA1 an einen Grenzwertgeber G1g angeschlossen, der an seinem Ausgang eine dem Differenzstromgrenzwert igd proportionale Messgröße abgibt. Außerdem ist an den Ausgang A1 der Messwertvorverarbeitungseinrichtung MV eine weitere Vergleichsanordnung VA2 mit ihrem einen Eingang angeschlossen; ein weiterer Eingang dieser weiteren Vergleichsanordnung VA2 ist über eine Bewertungsstufe B mit einem weiteren Ausgang A2 der Messwertvorverarbeitungseinrichtung MV verbunden; an diesem Ausgang A2 treten Stabilisierungsstrommomentanwerte is auf.

Ist die Gleichung (5) erfüllt, dann wird von der Vergleichsanordnung VA1 ein Betätigungssignal an einen Eingang E1 einer Logikschaltung L abgegeben, die der Auswerteeinrichtung AW nachgeordnet ist. Ist die Gleichung (6) erfüllt, dann liefert die weitere Vergleichsanordnung VA2 ein Betätigungssignal an einen Eingang E2 der Logikschaltung L.

Bei dem dargestellten Ausführungsbeispiel wird von der Logikschaltung L, deren Funktion später noch im einzelnen beschrieben wird, nicht bereits dann ein Auslösesignal A erzeugt, wenn an beiden Eingängen E1 und E2 Betätigungssignale der Vergleichsanordnungen VA1 und VA2 anstehen, sondern es müssen zur Ausgabe des Auslösesignals A noch weitere - unten näher beschriebene - Bedingungen erfüllt sein.

Zur Überprüfung der weiteren Bedingungen ist an den weiteren Ausgang A2 der Messwertvorverarbeitungseinrichtung MV ein erster Differenzierer DS angeschlossen, der an seinem Ausgang eine dem Differentialquotienten des Stabilisierungsstromes is nach der Zeit proportionale erste Messgröße isd erzeugt. Diese erste Messgröße isd wird einem Eingang einer ersten Grenzwertstufe Gs zugeführt, die mit ihrem anderen Eingang an einem Differenzstromquotientengrenzwert-Geber G1 liegt. Mit diesem Geber G1 wird ein Grenzwert des Differentialquotienten des Differenzstromes id nach der Zeit vorgegeben, der im Folgenden kurz mit Differenzstromquotientengrenzwert igd1 bezeichnet wird. Ist die erste Messgröße isd größer als der Differenzstromquotientengrenzwert igd1, gilt also die Beziehung (7)

$$isd > igd1 \qquad\qquad (7)$$

dann wird von der ersten Grenzwertstufe Gs ausgangsseitig an einen Eingang E3 der Logikschaltung L ein weiteres Betätigungssignal abgegeben.

Auch dem einen Ausgang A1 der Messvorverarbeitungseinrichtung MV ist ein zweiter Differenzierer Dd nachgeordnet, der an seinem Ausgang eine zweite Messgröße idd erzeugt, die dem Differentialquotienten des Differenzstromes id nach der Zeit entspricht. Diese zweite Messgröße idd liegt an einem Eingang einer zweiten Grenzwertstufe Gd, deren anderer Eingang ebenfalls mit dem einen Geber G1 verbunden ist. Ist die zweite Messgröße idd größer als der Differenzstromgrenzwert igd1, gilt also die nachstehende Gleichung (8)

$$idd > igd1 \qquad\qquad (8)$$

dann wird von dieser zweiten Grenzwertstufe Gd an einen Eingang E4 der Logikschaltung L ein zusätzliches Betätigungssignal abgegeben.

Durch die zusätzlichen Signale an den Eingängen E3 und E4 ist das erfindungsgemäße Verfahren schon vergleichsweise sicher in Bezug auf unerwünschte Fehlauslösungen geworden, es lässt sich jedoch in seiner Funktionsweise im Hinblick auf die Vermeidung von Fehlauslösungen noch sicherer gestalten, wenn eine weitere Beziehung (9) berücksichtigt wird, die nachstehend aufgeführt ist.

$$isd > idd \qquad\qquad (9)$$

In der Figur 1 ist dazu ein erster Komparator K1 vorgesehen, der mit seinem einen Eingang an dem Ausgang des zweiten Differenzierers Dd liegt und somit mit der zweiten Messgröße idd beaufschlagt ist; ein weiterer Eingang des ersten Komparators K1 ist an den Ausgang des einen Differenzierers Ds angeschlossen und daher mit der einen Messgröße isd beaufschlagt. Ist die obige Beziehung (9) erfüllt, dann gibt der eine Komparator K1 ein zusätzliches Betätigungssignal an einen Eingang E5 der Logikschaltung L ab.

An einen weiteren Eingang E6 der Logikschaltung L liegt mit seinem Ausgang ein zweiter Komparator K2, der zur Auswertung der nachstehenden Beziehung (10) dient.

$$idd > K \cdot isd \qquad\qquad (10)$$

Zu diesem Zweck ist der zweite Komparator K2 mit einem Eingang an den Ausgang des zweiten Differenzierers Dd angeschlossen. Ein weiterer Eingang des zweiten Komparators K2 ist über eine Umwertungsstufe U1 an den Ausgang des ersten Differenzierers Ds angeschlossen. Ist die Bedingung (10) erfüllt, dann gibt der zweite Komparator K2 ein Betätigungssignal an den Eingang E6 der Logikschaltung L ab.

Ferner ist bei dem Ausführungsbeispiel nach Figur 1 eine Prüfschaltung P vorgesehen, die mit ihrem Eingang am Ausgang des zweiten Differenzierers Dd liegt und überprüft, ob die zweite Messgröße idd größer als Null ist. Ist dies der Fall, dann gibt sie einen Impuls an einen Eingang E7 der Logikschaltung L ab. Ein weiterer Eingang E8 der Logikschaltung L ist mit einem Ausgang einer Vergleicherstufe VS verbunden. Diese ist an einem Eingang mit dem Stabilisierungsstrom is beaufschlagt, während ihr anderer Eingang über eine Bewertungseinrichtung BE mit einer Ermittlungseinrichtung U verbunden ist; diese ist eingangsseitig mit dem Stabilisierungsstrom is beaufschlagt und stellt den aktuell kleinsten Wert ismin und des größten Wertes ismax des Stabilisierungsstroms is fest. Ist die nachstehende Beziehung (11) erfüllt,

$$0{,}5is\max < is > KMIN \cdot is\min \qquad\qquad (11)$$

dann wird von der Vergleichsstufe VS ein Signal über den Eingang E8 an die Logikschaltung L abgegeben.

Die Logikschaltung L weist außerdem Eingänge E11, E12, E13, E14 und E15 auf. An den Eingang E11 ist eine erste Vergleicherstufe V1 angeschlossen, die eingangsseitig an den Ausgang A2 der Messwertvorverarbeitungseinrichtung MV und einen zweiten Grenzwertgeber G2g angeschlossen ist. Die Vergleicherstufe V1 überprüft, ob die Beziehung (12) eingehalten ist:

$$is > ish \qquad\qquad (12)$$

Ist dies der Fall, dann wird ein Sperrsignal an den Eingang E11 abgegeben.

An den Eingang E12 ist eine zweite Vergleichsstufe V2 mit ihrem Ausgang angeschlossen; mit ihrem einen Eingang ist die zweite Vergleichsstufe V2 über eine Umwertungsstufe U2 (Faktor 1/K)an den Grenzwertgeber G1g für den Differenzstromquotientengrenzwert idg angeschlossen, während der andere Eingang direkt mit dem Stabilisierungsstrom is beaufschlagt ist. Es wird somit mit der zweiten Vergleichsstufe V2 anhand eines ersten umbewerteten Grenzwertes idg/K die folgende Bedingung (13) überprüft:

$$is > idg / K \qquad\qquad (13)$$

Ist diese Bedingung und gleichzeitig mit einem zweiten umbewerteten Grenzwert 1,5*idg die Bedingung is>1,5*idg erfüllt, dann tritt am Eingang E12 der Logikschaltung L ein Sperrsignal auf.

Eine dritte Vergleichsstufe V3 ist eingangsseitig einerseits mit dem Ausgang des ersten Differenzierers DS und andererseits mit dem Ausgang des zweiten Gebers G2 verbunden; ausgangsseitig ist die dritte Vergleicherstufe V3 mit dem Eingang E13 der Logikschaltung L verbunden und gibt an diese ein Sperrsignal dann ab, wenn die folgende Bedingung (14) erfüllt ist:

$$isd > igd2 \qquad\qquad (14)$$

Eine vierte Vergleichsstufe V4 ist eingangsseitig einerseits über eine weitere Umwertungsstufe U3 (Faktor KA) mit dem weiteren Ausgang A2 der Messwertvorverarbeitungseinrichtung MV verbunden sowie andererseits direkt mit dem einen Ausgang A1 der Messwertvorverarbeitungseinrichtung MV. Ausgangsseitig ist die vierte Vergleichsstufe V4 mit einem Eingang E14 der Logikschaltung L verbunden und gibt an diesen Eingang ein Sperrsignal ab, wenn die folgende Beziehung (15) erfüllt ist :

$$id < KA \cdot is \qquad\qquad (15)$$

Schließlich wird mittels einer Vergleichereinrichtung VE überprüft, ob die nachstehenden Beziehungen (16) und (17) erfüllt ist:

$$is > KMIN \cdot is\,\text{min} \qquad\qquad (16)$$

$$is > 0,5 \cdot is\,\text{max} \qquad\qquad (17)$$

Zu diesem Zwecke ist die Vergleichseinrichtung VE eingangsseitig direkt mit dem Ausgang A2 der Messwertvorverarbeitungseinrichtung MV verbunden; ausgangsseitig ist die Vergleichseinrichtung VE mit dem Eingang E15 der Logikschaltung L verbunden. In der Vergleichereinrichtung wird ein berechneter Vergleichswert ermittelt, indem von dem Effektivwert des Stabilisierungsstromes iseff ein Vergleichswert subtrahiert wird. Der berechnete Vergleichswert wird mit dem Momentanwert des Stabilisierungsstromes is verglichen.

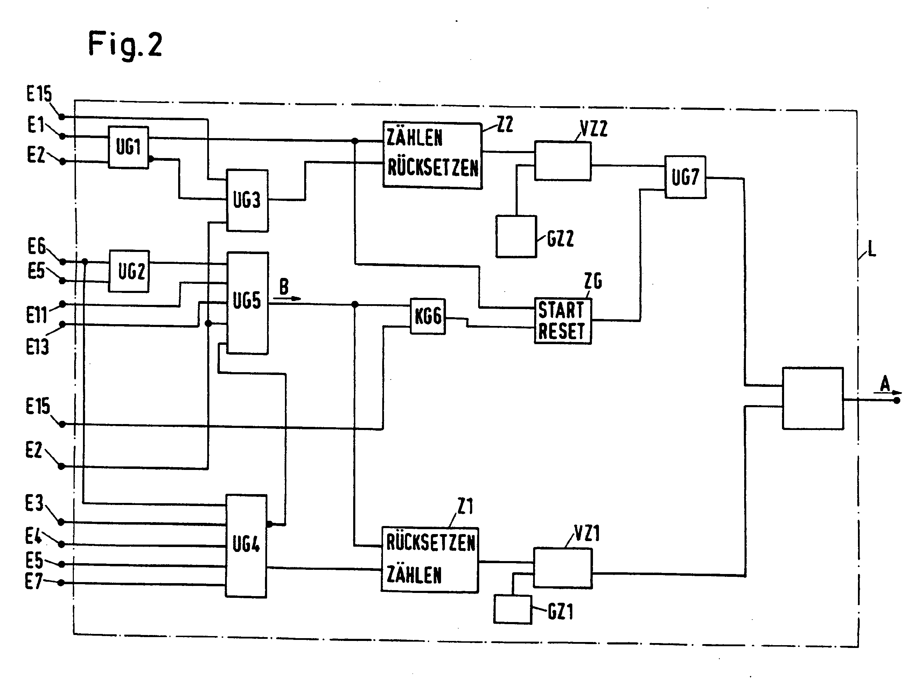

Wie die Figur 2 erkennen lässt, weist die der Auswerteeinrichtung AW nachgeordnete Logikschaltung L eingangsseitig mehrere UND-Glieder UG1 bis UG5 auf, die in der aus der Figur 2 ersichtlichen Weise eingangsseitig mit den Eingängen E1 bis E14 der Logikschaltung verbunden sind. Ist die erste Messgröße isd kleiner als der vorgegebene Differenzstromquotientengrenzwert igd1, und kleiner als die zweite Messgröße idd und übersteigt auch die zweite Messgröße idd diesen Grenzwert nicht und ist sie kleiner als die mit dem Kennlinienfaktor k bewertete erste Messgröße isd, dann wird am Ausgang des UND-Gliedes UG5 ein Sperrglied B erzeugt, wenn die Bedingungen

$$isd > igd2$$

$$idd > k \cdot isd$$

gegeben sind und gleichzeitig für den Momentanwert des Stabilisierungsstromes is gilt:

$$is > ish$$

$$is > idg \,/\, k$$

$$is > 1{,}5 \cdot idg$$

$$is > im$$

Dabei bezeichnet im einen Vergleichswert, der aus vorangehenden Effektivwerten des Stabilisierungsstromes is zuzüglich einem Schwellwert berechnet wird. Das Sperrsignal B trifft also bei einem äußeren Fehler bezüglich des zu überwachenden Abschnitts E des Energieversorgungsnetzes N auf.

Mit dem Sperrsignal B wird einerseits ein weiteres UND-Glied UG6 und andererseits ein eine Schnellstufe bildender Zähler Z1 an seinem Rücksetzeingang beaufschlagt, so dass beim Auftreten des Sperrsignals B und einem Signal am Empfang E15 ein Zeitgeber ZG zurückgesetzt wird und auch der Zähler Z1 zurückgesetzt wird. Es wird damit ein weiterer Zähler Z2 wirksam, der als Zeitstufe wirkt und bei einem Zählerstand größer als der von einem Geber GZ2 vorgegebene Zählwert Nz über einen Vergleicher VZ2 und ein zusätzliches UND-Glied UG7 ein Signal an ein ODER-Glied OG abgibt.

Die Schnellstufe mittels des Zählers Z1 wird wirksam, wenn in einem nachgeschalteten Vergleicher VZ1 ermittelt wird, dass im Zähler Z1 ein Zählerstand erreicht ist, der größer als ein vorgegebener Zählwert Ns eines weiteren Gebers GZ1 ist. Ns ist dabei erheblich kleiner als Nz gewählt. Ist der Zählerstand des Zählers Z1 größer als Ns, wird das Auslösesignal A erzeugt.

## Patentansprüche

1.  Verfahren zum Erzeugen eines Auslösesignals (A) nach dem Stromdifferentialschutzprinzip bei einem Fehler auf einem Abschnitt (E) eines elektrischen Energieversorgungsnetzes, bei dem

    - Differenzstromwerte (id) auf Überschreiten eines vorgegebenen unteren Grenzwertes des Differenzstromes (id) (Differenzstromgrenzwert (igu)) sowie auf Überschreiten mit einem Kennlinienfaktor (K) bewerteter Stabilisierungsstromwerte (is) überwacht werden und
    - das Auslösesignal (A) erzeugt wird, wenn gleichzeitig positive Ergebnisse beider Überwachungen vorliegen,

    **dadurch gekennzeichnet, dass**

    - die Differenzstromwerte (id) und die Stabilisierungsstromwerte (is) mit Momentanwerten der an dem Abschnitt (E) des elektrischen Energieversorgungsnetzes erfassten Ströme (i1, i2) als Momentanwerte errechnet werden,
    - eine dem Differentialquotienten des Stabilisierungsstromes (is)nach der Zeit proportionale erste Messgröße (isd) gebildet und in einem Auswertungsvorgang überprüft wird, ob diese erste Messgröße (isd) einen vorgegebenen Grenzwert des Differentialquotienten des Differenzstromes nach der Zeit (Differenzstromquotientengrenzwert (igd1) überschreitet,
    - eine dem Differentialquotienten des Differenzstromes (id) nach der Zeit proportionale zweite Messgröße (idd) gebildet und in einem weiteren Auswertungsvorgang überprüft wird, ob die zweite Messgröße (idd) den Differenzstromquotientengrenzwert (igd1) übersteigt, und
- das Auslösesignal (A) erzeugt wird, wenn beide Auswertungsvorgänge gleichzeitig mit den beiden Überwachungen positive Ergebnisse erbringen.

2. Verfahren nach Anspruch 1,
**dadurch gekennzeichnet, dass**

- geprüft wird, ob die erste Messgröße (isd) größer als die zweite Messgröße (idd) ist, und gegebenenfalls das Auslösesignal (A) erzeugt wird.

3. Verfahren nach Anspruch 1 oder 2,
**dadurch gekennzeichnet, dass**
geprüft wird, ob die zweite Messgröße (idd) die mit dem Kennlinienfaktor (K) bewertete erste Messgröße (isd) überschreitet, und gegebenenfalls das Auslösesignal (A) erzeugt wird.

4. Verfahren nach einem der vorangehenden Ansprüche,
**dadurch gekennzeichnet, dass**

- jeweils in einem Zeitbereich, in dem die erste Messgröße (isd) kleiner als Null wird, der kleinste Wert (ismin) des Stabilisierungsstroms (is) bestimmt wird,
- jeweils in einem Zeitbereich, in dem die erste Messgröße (isd) größer als Null wird, ihr größter Wert (ismax) bestimmt wird, und

- überprüft wird, ob der Stabilisierungsstrom (is) größer als das KMIN-fache des kleinsten Wertes (ismin) mit

$$1 < \mathtt{KMIN} < \sqrt{2}$$ sowie des 0,5fachen Wertes des größten Wertes (ismax) ist und

- gegebenenfalls das Auslösesignal (A) erzeugt wird.

5. Verfahren nach einem der vorangehenden Ansprüche,
**dadurch gekennzeichnet, dass**

- das Auslösesignal (A) erzeugt wird, wenn bei den Auswertungsvorgängen und den Überwachungen Ns-Mal hintereinander positive Ergebnisse erzielt worden sind, wobei Ns frei wählbar ist.

6. Verfahren nach Anspruch 5,
**dadurch gekennzeichnet, dass**

- beim Ausbleiben von Ns-Ergebnissen das Auslösesignal (A) dann erzeugt wird, wenn mindestens die Überwachungen Nz-Mal positive Ergebnisse erbracht haben mit Ns«Nz.

7. Verfahren nach einem der vorangehenden Ansprüche,
**dadurch gekennzeichnet, dass**
beim Ausbleiben eines Auslösesignals (A) ein internes Sperrsignal (B) erzeugt wird, wenn

- die erste Messgröße (isd) größer ist als der Grenzwert dieser Größe (igd2),
- ferner die zweite Messgröße (idd) kleiner ist als der mit dem k-Faktor bewertete Momentanwert der ersten Messgröße (k*isd) und dabei der Momentanwert des Stabilisierungsstroms (is) größer ist als
- ein Grenzwert (ish),
- ein erster umbewerteter Grenzwert (idg/k),
- ein zweiter umbewerteter Grenzwert (1,5*idg) und
- ein als Mittelwert aus vorangehenden Werten berechnete Vergleichswert (iseff-Vergleichswert).

8. Verfahren nach Anspruch 7,
**dadurch gekennzeichnet, dass**

- nach dem Erzeugen eines Sperrsignals ein Auslösesignal erst dann erzeugt wird, wenn mindestens Nz-Mal die Überwachungen und/oder die Auswertungen ein positives Ergebnis erbracht haben.

**9.** Stromdifferentialschutzanordnung für einen Abschnitt (E) eines elektrischen Energieversorgungsnetzes mit

- einer Messwertvorverarbeitungseinrichtung (MV), in der aus an den Enden des Abschnittes (E) erfassten Strömen (i1, i2) fortlaufend jeweils Differenzstromwerte (id) und diesen jeweils zugeordnete Stabilisierungsstromwerte (is) gebildet werden, mit
- einer der Messwertvorverarbeitungseinrichtung (MV) nachgeordneten Auswerteeinrichtung (AW),

- in der der Differenzstrom (id) darauf geprüft wird, ob er einen vorgegebenen Differenzstromgrenzwert (idg) überschreitet, und mit

- einer Logikschaltung (L1), die eingangsseitig an die Auswerteeinrichtung (AW) angeschlossen ist und einen Ausgang zur Abgabe eines Auslösesignals (A) aufweist,

**dadurch gekennzeichnet, dass**
die Messwertvorverarbeitungseinrichtung (MV) so ausgebildet ist, dass sie Differenzstrommomentanwerte und Stabilisierungsstrommomentanwerte (is) erzeugt,

- einem mit Stabilisierungsstrommomentanwerten (is)beaufschlagten ersten Differenzierer (Ds)eine erste Grenzwertstufe (Gs) nachgeordnet ist, die eingangsseitig auch an einen Differenzstromquotientengrenzwert-Geber (G1) angeschlossen ist,
- einem mit Differenzstrommomentanwerten beaufschlagten zweiten Differenzierer (Dd) eine zweite Grenzwertstufe (Gd) nachgeordnet ist, die eingangsseitig auch an den Differenzstromquotienten-Geber (G19) angeschlossen ist, und
- den Grenzwertstufen die Logikschaltung (L1) nachgeordnet ist, die beim Vorliegen von Ausgangssignalen der Grenzwertstufen das Auslösesignal (A) erzeugt.

**10.** Stromdifferentialschutzanordnung nach Anspruch 9,
**dadurch gekennzeichnet, dass**

- an die beiden Differenzierer (Dd, Ds) ein erster Komparator (K1) angeschlossen ist, der ausgangsseitig an die Logikschaltung (L1) angeschlossen ist.

**11.** Stromdifferentialschutzanordnung nach Anspruch 7 oder 8,
**dadurch gekennzeichnet, dass**

- dem ersten Differenzierer (Ds) über eine Umwertungsstufe (U1) und dem zweiten Differenzierer (Dd) mittelbar ein zweiter Komparator (K2) nachgeordnet ist, der ausgangsseitig an die Logikschaltung (L1) angeschlossen ist.

**12.** Stromdifferentialschutzanordnung und einem der Ansprüche 9 bis 11,
**dadurch gekennzeichnet, dass**

- eine Ermittlungseinrichtung (U) für den kleinsten Wert (ismin) des Stabilisierungsstroms (is) vorgesehen ist,
- an die Ermittlungseinrichtung (U) eine Bewertungseinrichtung (BE) angeschlossen ist und
- der Bewertungseinrichtung (BE) eine Vergleichsstufe (VS) nachgeordnet ist, die eingangsseitig auch mit den Stabilisierungsstrommomentanwerten (is) beaufschlagt ist und ausgangsseitig an die Logikschaltung (L1) angeschlossen ist.

**13.** Stromdifferentialschutzanordnung nach einem der Ansprüche 9 bis 12,
**dadurch gekennzeichnet, dass**

- einem Geber (G1g) für den Differenzstromquotientgrenzwert (idg) und einem zweiten Geber (G2) für den Stabilisisierungsquotientengrenzwert (igs) eine Vergleichsstufe (V1) nachgeordnet ist, die ausgangsseitig an die Logikschaltung (L1) angeschlossen ist,
- eine weitere Vergleichsstufe (V2) eingangsseitig einerseits mit dem Eingang des ersten Differenzierers (Ds) und andererseits über eine weitere Umwertungsstufe (U2) mit einem Geber (G1g) für den Grenzwert (idg) des Differenzstromes (id) verbunden ist und ausgangsseitig an die Logikschaltung (L1) angeschlossen ist,
- eine dritte Vergleichsstufe (V3) eingangsseitig einerseits mit dem Ausgang des ersten Differenzierers (Ds) und andererseits mit dem Ausgang des weiteren Gebers (G2) verbunden ist und ausgangsseitig an die Logikschaltung (L1) angeschlossen ist,
- eine vierte Vergleichsstufe (V4) eingangsseitig einerseits an den Eingang des zweiten Differenzierers (Dd) und andererseits über eine dritte Umwertungsstufe (U3) an den Eingang des einen Differenzierers (Ds) angeschlossen ist und ausgangsseitig mit der Logikschaltung (L1) verbunden ist und
- eine fünfte Vergleichsstufe (V5) eingangsseitig einerseits mit dem Ausgang des zweiten Differenzierers (Dd) und andererseits über eine vierte Umwertungsstufe (U3) mit dem Ausgang des ersten Differenzierers (Ds) verbunden ist und ausgangsseitig an die Logikschaltung (L1) angeschlossen ist.

**Claims**

1. Method for generating a trigger signal (A) according to the current differential protection principle in the case of a fault on a section (E) of an electrical power supply system, in which

   - differential current values (id) are monitored with regard to exceeding a predetermined lower limit value of the differential current (id) (differential current limit value (igu)) and also with regard to exceeding stabilization current values (is) weighted with a characteristic curve factor (K), and
   - the trigger signal (A) is generated if positive results of the two instances of monitoring are present simultaneously,

   **characterized in that**

   - the differential current values (id) and the stabilization current values (is) are calculated with instantaneous values of the currents (i1, i2) detected at the section (E) of the electrical power supply system, as instantaneous values,
   - a first measurement quantity (isd), which is proportional to the differential quotient of the stabilization current (is) with respect to time, is formed and checked in an evaluation operation to determine whether this first measurement quantity (isd) exceeds a predetermined limit value of the differential quotient of the differential current with respect to time (differential current quotient limit value (igd1),
   - a second measurement quantity (idd), which is proportional to the differential quotient of the differential current (id) with respect to time, is formed and checked in a further evaluation operation to determine whether the second measurement quantity (idd) exceeds the differential current quotient limit value (igd1), and
   - the trigger signal (A) is generated if the two evaluation operations produce positive results at the same time as the two instances of monitoring.

2. Method according to Claim 1,
   **characterized in that**

   - a check is made to determine whether the first measurement quantity (isd) is greater than the second measurement quantity (idd), and, if appropriate, the trigger signal (A) is generated.

3. Method according to Claim 1 or 2,
   **characterized in that**
   a check is made to determine whether the second measurement quantity (idd) exceeds the first measurement quantity (isd) weighted with the characteristic curve factor (K), and, if appropriate, the trigger signal (A) is generated.

4. Method according to one of the preceding claims,
   **characterized in that**

   - the smallest value (ismin) of the stabilization current (is) is determined in each case in a time range in which the first measurement quantity (isd) becomes less than zero,
   - its largest value (ismax) is determined in each case in a time range in which the first measurement quantity (isd) becomes greater than zero, and
   - a check is made to determine whether the stabilization current (is) is greater than KMIN times the smallest value (ismin), where $1 < KMIN < \sqrt{2}$, and 0.5 times the value of the largest value (ismax), and,
   - if appropriate, the trigger signal (A) is generated.

5. Method according to one of the preceding claims,
   **characterized in that**

- the trigger signal (A) is generated if the evaluation operations and the instances of monitoring have yielded positive results Ns times in succession, where Ns is freely selectable.

6. Method according to Claim 5,
   **characterized in that**

   - in the absence of Ns results, the trigger signal (A) is generated when at least the instances of monitoring have produced positive results Nz times, where Ns << Nz.

7. Method according to one of the preceding claims,
   **characterized in that**,
   in the absence of a trigger signal (A), an internal inhibit signal (B) is generated if

   - the first measurement quantity (isd) is greater than the limit value of this quantity (igd2),
   - furthermore the second measurement quantity (idd) is less than the instantaneous value - weighted with the k factor

     - of the first measurement quantity (k*isd) and, at the same time, the instantaneous value of the stabilization current (is) is greater than

   - a limit value (ish),
   - a first reweighted limit value (idg/k),
   - a second reweighted limit value (1.5*idg), and
   - a comparison value calculated as mean value from previous values (isrms comparison value).

8. Method according to Claim 7,
   **characterized in that**

   - after the generation of an inhibit signal, a trigger signal is generated only when the instances of monitoring and/or the instances of evaluation have produced a positive result at least Nz times.

9. Current differential protection arrangement for a section (E) of an electrical power supply system having

   - a measured value preprocessing device (MV), in which respective differential current values (id) and stabilization current values (is) respectively assigned thereto are formed continuously from currents (i1, i2) detected at the ends of the section (E), having
   - an evaluation device (AW) connected downstream of the measured value preprocessing device (MV),

     - in which evaluation device the differential current (id) is checked to determine whether it exceeds a predetermined differential current limit value (idg), and having

   - a logic circuit (L1), which, on the input side, is connected to the evaluation device (AW) and has an output for outputting a trigger signal (A),

   **characterized in that**
   the measured value preprocessing device (MV) is designed in such a way that it generates differential current instantaneous values and stabilization current instantaneous values (is),

     - a first limit value stage (Gs) is arranged downstream of a first differentiator (Ds), to which stabilization current instantaneous values (is) are applied, which limit value stage is also connected to a differential current quotient limit value transmitter (G1) on the input side,
     - a second limit value stage (Gd) is arranged downstream of a second differentiator (Dd), to which differential current instantaneous values are applied, which limit value stage is also connected to the differential current quotient transmitter (G19) on the input side, and
     - the logic circuit (L1) is arranged downstream of the limit value stages and generates the trigger signal (A) when output signals of the limit value stages are present.

10. Current differential protection arrangement according to Claim 9,

**characterized in that**

- a first comparator (K1) is connected to the two differentiators (Dd, Ds) and, on the output side, is connected to the logic circuit (L1).

11. Current differential protection arrangement according to Claim 7 or 8,
**characterized in that**

- a second comparator (K2) is indirectly arranged downstream of the first differentiator (Ds) via a translation stage (U1) and of the second differentiator (Dd) and is connected to the logic circuit (L1) on the output side.

12. Current differential protection arrangement according to one of Claims 9 to 11,
**characterized in that**

- provision is made of a determination device (U) for the smallest value (ismin) of the stabilization current (is),
- a weighting device (BE) is connected to the determination device (U), and
- a comparison stage (VS) is arranged downstream of the weighting device (BE), to which comparison stage, on the input side, the stabilization current instantaneous values (is) are also applied and which comparison stage is connected to the logic circuit (L1) on the output side.

13. Current differential protection arrangement according to one of Claims 9 to 12,
**characterized in that**

- a comparison stage (V1) is arranged downstream of a transmitter (G1g) for the differential current quotient limit value (idg) and a second transmitter (G2) for the stabilization quotient limit value (igf), which comparison stage is connected to the logic circuit (L1) on the output side,
- a further comparison stage (V2) is connected, on the input side, on the one hand to the input of the first differentiator (Ds) and on the other hand, via a further translation stage (U2), to a transmitter (G1g) for the limit value (idg) of the differential current (id) and is connected to the logic circuit (L1) on the output side,
- a third comparison stage (V3) is connected, on the input side, on the one hand to the output of the first differentiator (Ds) and on the other hand to the output of the further transmitter (G2) and is connected to the logic circuit (L1) on the output side,
- a fourth comparison stage (V4) is connected, on the input side, on the one hand to the input of the second differentiator (Dd) and on the other hand, via a third translation stage (U3), to the input of the first differentiator (Ds) and is connected to the logic circuit (L1) on the output side, and
- a fifth comparison stage (V5) is connected, on the input side, on the one hand to the output of the second differentiator (Dd) and on the other hand, via a fourth translation stage (U3), to the output of the first differentiator (Ds) and is connected to the logic circuit (L1) on the output side.

**Revendications**

1. Procédé de production d'un signal ( A ) de déclenchement suivant le principe de protection vis-à-vis de courants différentiels en cas de défaut sur un tronçon ( E ) d'un réseau électrique d'alimentation en énergie, dans lequel

- on contrôle si des valeurs ( id ) de courant de différence dépassent une valeur limite inférieure prescrite du courant ( id ) de différence ( valeur ( igu ) limite de courant de différence ), ainsi que si elles dépassent des valeurs ( is ) de courant de stabilisation évaluées par un facteur ( K ) de courbe caractéristique et
- on produit le signal ( A ) de déclenchement lorsqu'il y a simultanément des résultats positifs des deux contrôles,

**caractérisé en ce que**

- on calcule, sous forme de valeurs instantanées, les valeurs ( id ) de courant de différence et les valeurs ( is ) de courant de stabilisation par des valeurs instantanées des courants ( i1, i2 ) détectés sur le tronçon ( E ) du réseau électrique d'alimentation en énergie,
- on forme une première grandeur ( isd ) de mesure proportionnelle en fonction du temps au quotient différentiel du courant ( is ) de stabilisation et, dans une opération d'exploitation, on contrôle si cette première grandeur ( isd ) de mesure dépasse une valeur limite prescrite du quotient différentiel du courant de différence en fonction du temps ( valeur ( igd1 ) limite du quotient du courant de différence ),
- on forme une deuxième grandeur ( idd ) de mesure proportionnelle en fonction du temps au quotient différentiel du courant ( id ) de différence et, dans une autre opération d'exploitation, on contrôle si la deuxième grandeur ( idd ) de mesure dépasse la valeur ( igd1 ) limite de quotient du courant de différence, et
- on produit le signal ( A ) de déclenchement lorsque les deux opérations d'exploitation donnent simultanément des résultats positifs avec les deux contrôles.

**2.** Procédé suivant la revendication 1,
**caractérisé en ce que**
on contrôle si la première grandeur ( isd ) de mesure est plus grande que la deuxième grandeur ( idd ) de mesure et, le cas échéant, on produit le signal ( A ) de déclenchement.

**3.** Procédé suivant la revendication 1 ou 2,
**caractérisé en ce que**
l'on contrôle si la deuxième grandeur ( idd ) de mesure dépasse la première grandeur ( isd ) de mesure évaluée par le facteur ( K ) de courbe caractéristique et on produit, le cas échéant, le signal ( A ) de déclenchement.

**4.** Procédé suivant l'une des revendications précédentes,
**caractérisé en ce que**

- respectivement dans un laps de temps, dans lequel la première grandeur ( isd ) de mesure est plus petite que zéro, on détermine la valeur ( ismin ) la plus petite du courant ( is ) de stabilisation,
- respectivement dans un laps de temps, dans lequel la première grandeur ( isd ) de mesure est plus grande que zéro, on détermine sa valeur ( ismax ) la plus grande, et

- on contrôle si le courant ( is ) de stabilisation est plus grand que KMIN fois la valeur ( ismin ) la plus petite,

avec $1 < \mathrm{KMIN} < \sqrt{2}$ , ainsi que 0,5 fois la valeur ( ismax ) la plus grande et

- on produit, le cas échéant, le signal ( A ) de déclenchement.

**5.** Procédé suivant l'une des revendications précédentes,
**caractérisé en ce que**

- on produit le signal ( A ) de déclenchement, si, lors des opérations d'exploitation et des contrôles, des résultats positifs se succédant Ns fois ont été atteints, Ns pouvant être choisi librement.

**6.** Procédé suivant la revendication 5,
**caractérisé en ce que**

- en l'absence de Ns résultats, on produit le signal ( A ) de déclenchement, lorsque les contrôles ont donné des résultats positifs au moins Nz fois, avec Ns très inférieur à Nz.

**7.** Procédé suivant l'une des revendications précédentes,
**caractérisé en ce que**
en l'absence d'un signal ( A ) de déclenchement, on produit un signal ( B ) interne d'arrêt, lorsque

- la première grandeur ( isd ) de mesure est plus grande que la valeur limite de cette grandeur ( igd2 ),
- en outre, la deuxième grandeur ( idd ) de mesure est plus petite que la valeur instantanée, évaluée par le facteur ( K ), de la première grandeur ( K*isd ) de mesure et la valeur instantanée du courant ( is ) de stabilisation est plus grande que
- une valeur ( ish ) limite,
- une première valeur ( idg/k ) limite réévaluée,
- une deuxième valeur ( 1,5*idg ) limite réévaluée et
- une valeur ( valeur de comparaison iseff ) de comparaison, calculée en tant que valeur moyenne à partir des valeurs précédentes.

**8.** Procédé suivant la revendication 7,

**caractérisé en ce que**

- après la production d'un signal d'arrêt, on ne produit un signal de déclenchement que si au moins Nz fois les contrôles et/ou les exploitations ont donné un résultat positif.

**9.** Dispositif de protection vis-à-vis d'un courant différentiel d'un tronçon ( E ) d'un réseau électrique d'alimentation en énergie, comprenant

- un dispositif ( MV ) de pré-traitement de valeurs de mesure, dans lequel on forme en continu à partir de courants ( i1, i2 ) détectés aux extrémités du tronçon ( E ), respectivement des valeurs ( id ) de courant de différence et des valeurs ( is ) de courant de stabilisation associées respectivement à celles-ci, comprenant
- un dispositif ( AW ) d'exploitation en aval du dispositif ( MV ) de pré-traitement de valeur de mesure,
- dans lequel on contrôle le courant ( id ) de différence pour savoir s'il dépasse une valeur ( idg ) limite de courant de différence prescrite, et comprenant
- un circuit ( L1 ) logique qui est relié du côté de l'entrée au dispositif ( AW ) d'exploitation et qui a une sortie pour émettre un signal ( A ) de déclenchement,

**caractérisé en ce que**
le dispositif ( MV ) de pré-traitement de valeurs de mesure est tel qu'il produit des valeurs instantanées de courant de différence et des valeurs ( is ) instantanées de courant de stabilisation,

- en aval d'un premier différencieur ( Ds ) alimenté par des valeurs ( is ) instantanées de courant de stabilisation est monté un premier étage ( Gs ) de valeur limite, qui est relié du côté de l'entrée également à un indicateur ( G1 ) de valeur limite de quotient de courant de différence,
- en aval d'un deuxième différencieur ( Dd ) alimenté par des valeurs instantanées de courant de différence est monté un deuxième étage ( Gd ) de valeur limite, qui est relié du côté de l'entrée également à l'indicateur ( G19 ) de quotient de courant de différence, et
- en aval des étages de valeur limite est monté le circuit ( L1 ) logique qui produit le signal ( A ) de déclenchement en la présence de signaux de sortie des étages de valeur limite.

**10.** Dispositif de protection vis-à-vis d'un courant différentiel suivant la revendication 9,
**caractérisé en ce que**

- aux deux différencieurs ( Dd, Ds ) est relié un premier comparateur ( K1 ) qui est relié du côté de la sortie au circuit ( L1 ) logique.

**11.** Dispositif de protection vis-à-vis d'un courant différentiel suivant la revendication 7 ou 8,
**caractérisé en ce que**

- en aval du premier différencieur ( Ds ) est monté par l'intermédiaire d'un étage ( U1 ) de réévaluation et du deuxième différencieur ( Dd ) directement un deuxième comparateur ( K2 ) qui est relié du côté de la sortie au circuit ( L1 ) logique.

**12.** Dispositif de protection vis-à-vis d'un courant différentiel suivant l'une des revendications 9 à 11,
**caractérisé en ce que**

- il est prévu un dispositif ( U ) de détermination de la valeur ( ismin ) la plus petite du courant ( is ) de stabilisation,
- un dispositif ( BE ) d'évaluation est relié au dispositif ( U ) de détermination et
- en aval du dispositif ( BE ) d'évaluation est monté un étage ( VS ) de comparaison, qui est alimenté du côté de l'entrée également par les valeurs ( is ) instantanées de courant de stabilisation et qui est relié du côté de la sortie au circuit ( L1 ) logique.

**13.** Dispositif de protection vis-à-vis d'un courant différentiel suivant l'une des revendications 9 à 12,
**caractérisé en ce que**

- en aval d'un indicateur ( G1g ) de la valeur ( idg ) limite du quotient du courant de différence et d'un deuxième indicateur ( G2 ) de la valeur ( igs ) limite du quotient de stabilisation est monté un étage ( V1 ) de comparaison, qui est relié du côté de la sortie au circuit ( L1 ) logique,

- un autre étage ( V2 ) de comparaison est relié du côté de l'entrée, d'une part, à l'entrée du premier différencieur ( Gs ) et, d'autre part, par l'intermédiaire d'un autre étage ( U2 ) de réévaluation, à un indicateur ( G1g ) de la valeur ( idg ) limite du courant ( id ) de différence et est raccordé du côté de la sortie au circuit ( L1 ) logique,

- un troisième étage ( V3 ) de comparaison est relié du côté de l'entrée, d'une part, à la sortie du premier différencieur ( Ds ) et, d'autre part, à la sortie de l'autre indicateur ( G2 ) et est raccordé du côté de la sortie au circuit ( L1 ) logique,

- un quatrième étage ( V4 ) de comparaison est relié du côté de l'entrée, d'une part, à l'entrée du deuxième différencieur ( Dd ) et, d'autre part, par un troisième étage ( U3 ) de réévaluation, à l'entrée du premier différencieur ( Ds ) et est relié du côté de la sortie au circuit ( L1 ) logique et

- un cinquième étage ( V5 ) de comparaison est relié du côté de l'entrée, d'une part, à la sortie du deuxième différencieur ( Dd ) et, d'autre part, par l'intermédiaire d'un quatrième étage ( U3 ) de réévaluation, à la sortie du premier différencieur ( Ds ) et est relié du côté de la sortie au circuit ( L1 ) de logique.

Fig.1

Fig.2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4436254 C1